# DEMANDE DE BREVET EUROPEEN

(11) **EP 0 600 777 A1**
(43) Date de publication de la demande: **08.06.1994**
(21) Numéro de dépôt: 93402880.4
(22) Date de dépôt: 29.11.1993
(51) Int. Cl.: B60S 1/08, B60S 1/02

(54) **Dispositif pour le dégivrage et/ou le désembuage, notamment d'un pare-brise électrique de véhicule automobile**

(30) Priorité: 02.12.1992 FR 9214519
(71) Demandeur: VALEO EQUIPEMENTS ELECTRIQUES MOTEUR, 94000 Créteil (FR)
(72) Inventeur: Perrier, Pierre, F-75013 Paris (FR); Vidal, Francis, F-92170 Vanves (FR)
(74) Mandataire: Gamonal, Didier

(57) **Abrégé**

La présente invention concerne un dispositif pour le dégivrage et/ou le désembuage, notamment d'un pare-brise électrique (PBE) de véhicule automobile, comprenant une batterie (BAT), un premier alternateur (ALT1), des moyens d'alimentation (ALT2,REG2,COM) du pare-brise électrique, une logique de commande (LOGCOM), des moyens de commande d'essuyage (ESS).

Selon l'invention, la logique de commande (LOGCOM) est adaptée à définir un premier intervalle de temps, fonction de la température extérieure (TEM) et un second intervalle de temps dont la valeur est une fonction du premier intervalle de temps pendant lequel les moyens de commande de l'essuyage sont inhibés.

## Description

La présente invention concerne un dispositif pour le dégivrage et/ou le désembuage, notamment d'un pare-brise électrique de véhicule automobile.

Les circuits électriques d'un véhicule sont habituellement alimentés par une batterie d'accumulateurs chargée par un alternateur dont le courant d'excitation est régulé par un régulateur.

Il est avantageux de subdiviser en fait les circuits électriques du véhicule en un circuit principal et des circuits auxiliaires. Le circuit principal comprend des circuits d'allumage, de charge de batterie, de chauffage, de ventilation et d'éclairage alimentés sous une tension réseau nominale voisine de 14 volts et un circuit auxiliaire comportant un réseau de chauffage électrique rapide destiné à assurer le dégivrage et/ou le désembuage de la lunette arrière et du pare-brise.

Pour créer une surtension propre à assurer les fonctions précitées, on utilise deux alternateurs liés à des moyens de commutation appropriés, de manière à ce que le premier soit utilisé pour l'alimentation du circuit principal sous une tension réseau nominale et que le second, lorsqu'une opération de dégivrage est commandée, alimente le circuit auxiliaire sous une tension réseau élevée.

Une telle configuration donne globalement satisfaction et assure en cas de besoin un dégivrage rapide en particulier du pare-brise.

Avant, ou au début de l'opération de dégivrage, le pare-brise est plus ou moins totalement recouvert de givre et donc empêche le conducteur d'avoir une visibilité correcte.

On s'est aperçu que, dans ces conditions, le conducteur avait tendance, parallèlement à la mise en route du dégivrage, à déclencher les moyens d'essuyage.

Ces moyens d'essuyage sont constitués d'au moins un balai d'essuie-glace équipé d'une lame en caoutchouc prenant appui sur la surface à essuyer, et, dans les conditions atmosphériques précitées, lesdites lames sont le plus souvent collées sur le pare-brise et offrent, de ce fait, un couple résistant très élevé au système d'entraînement moteur-tringlerie des moyens d'essuyage.

Malgré toutes les précautions prises, le couple résistant est tel qu'il peut entraîner une destruction électrique du moteur ou une déformation importante de la tringlerie avec pour conséquence une mise hors service des moyens d'essuyage et un endommagement de la lame d'essuyage.

La présente invention élimine ces inconvénients et propose à cet effet un dispositif pour le dégivrage et/ou le désembuage notamment d'un pare-brise électrique de véhicule automobile comprenant une batterie reliée à un premier alternateur, des moyens d'alimentation du pare-brise électrique, une logique de commande recevant un signal image de la température extérieure du véhicule et déclenchant au début d'une opération de dégivrage un premier moyen de temporisation définissant un premier intervalle de temps, dont la valeur est fonction du signal pour déterminer la durée globale de l'opération de dégivrage, des moyens de commande de l'essuyage, caractérisé en ce qu'un second moyen de temporisation est adapté à définir un second intervalle de temps, dont la valeur est une fraction du premier intervalle de temps et en ce que ledit second moyen de temporisation est adapté à provoquer l'inhibition des moyens de commande de l'essuyage.

Selon d'autres caractéristiques de l'invention :
- la logique de commande est agencée de manière à ce que le second moyen de temporisation soit apte à émettre un premier signal retardé destiné au déclenchement automatique des moyens de commande de l'essuyage et à ce que le premier moyen de temporisation soit apte à émettre un second signal retardé destiné d'une part à l'arrêt automatique desdits moyens de commande de l'essuyage et d'autre part au déclenchement de l'opération de désembuage
- la logique de commande comporte des moyens de comparaison, entre la température extérieure et une température de seuil prédéterminée, aptes à interdire l'opération de dégivrage si la température extérieure est supérieure à la température de seuil
- les moyens d'alimentation du pare-brise électrique comporte un second alternateur associé à un régulateur et des moyens de commutation adaptés à mettre en liaison directe le second alternateur avec le pare-brise électrique lors d'une opération de dégivrage et/ou de désembuage
- la logique de commande comporte des moyens de comparaison, entre la vitesse réelle du premier alternateur et une vitesse minimum prédéterminée, aptes à interdire l'opération de dégivrage si la vitesse réelle est inférieure à la vitesse minimum
- le véhicule comportant un calculateur du contrôle moteur destiné à la régulation du régime moteur, la logique de commande est agencée de manière à émettre vers ledit calculateur un signal lorsque la vitesse réelle est inférieure à la vitesse minimum, ledit signal provoquant une augmentation de la vitesse réelle des premier et second alternateurs, de manière à n'autoriser le déclenchement de l'opération de dégivrage que si ladite vitesse réelle est égale ou supérieure à ladite vitesse minimum
- la logique de commande comprend des moyens de régulation aptes, lors d'une opération de dégivrage, à provoquer une augmentation de puissance du second alternateur, ladite augmentation comportant des paliers successifs.

La présente invention sera mieux comprise avec la description qui va suivre en regard des dessins annexés dans lesquels :
- la figure 1 est un schéma bloc du dispositif selon l'invention ;
- la figure 2 est un diagramme temporel illustrant les différentes phases de fonctionnement du dispositif ;
- la figure 3 est un organigramme illustrant un exemple de cycle opératoire de fonctionnement du dispositif.

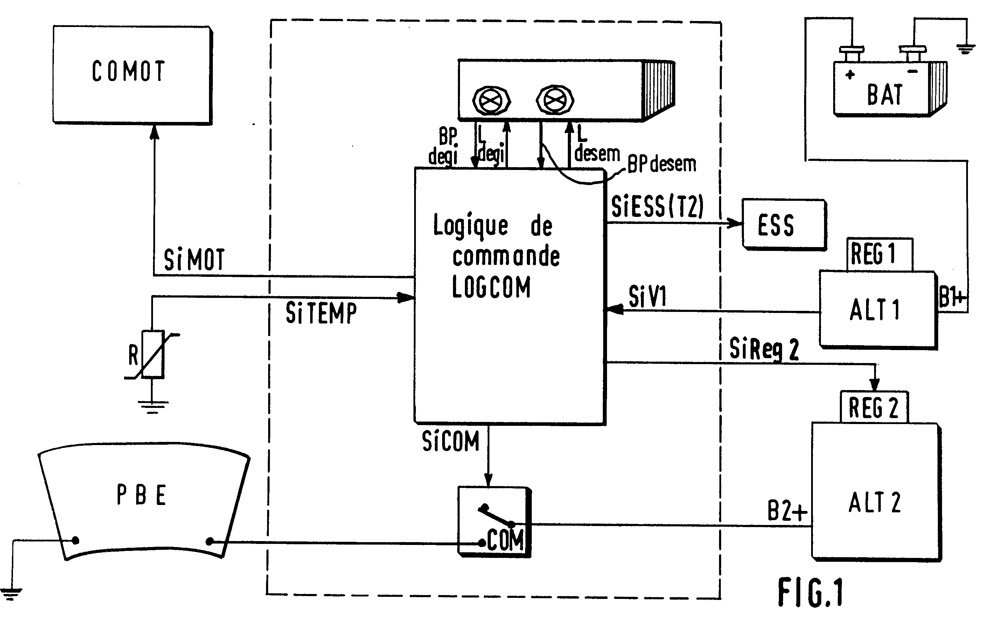

Sur la figure 1, on a représenté une batterie BAT, dont le pôle négatif est relié à la masse et dont le pôle positif est relié à la borne B1+ d'un premier alternateur ALT1 destiné à alimenter un circuit principal sous une tension réseau nominale voisine de 14 volts régulée de manière classique par un régulateur associé REG1.

L'ensemble alternateur ALT1, REG1 met à disposition d'un bloc logique de commande LOGCOM un signal SiV1 représentatif de la vitesse de rotation dudit alternateur ALT1.

Un circuit auxiliaire, pour l'alimentation sous tension réseau élevée d'un pare-brise PBE équipé d'une résistance électrique, est constitué d'un second alternateur ALT2 avec son régulateur associé REG2, le second alternateur ALT2 étant lié mécaniquement au premier alternateur ALT1.

La borne B2+ de l'alternateur ALT2 est reliée au pare-brise PBE via des moyens de commutation COM qui sont mis en oeuvre par un signal SiCOM du bloc logique de commande LOGCOM dans des conditions qui seront explicitées plus avant.

Le second alternateur ALT2, son régulateur associé REG2, et les moyens de commutation COM constituent les moyens d'alimentation du pare-brise électrique PBE.

Dans l'exemple représenté, le conducteur du véhicule, pour déclencher une opération de dégivrage, appuie sur un bouton de dégivrage BPdegi situé sur le tableau de bord et relié électriquement à la logique de commande LOGCOM. Au bouton de dégivrage BPdegi est associé une lampe témoin Ldegi indiquant au conducteur que l'opération de dégivrage est en cours.

Une opération de désembuage peut être commandée directement par le conducteur grâce à un bouton de désembuage BP desem auquel il est associé une lampe témoin Ldesem indiquant que l'opération de désembuage est en cours.

La logique de commande LOGCOM est reliée également à une résistance R du type CTN, c'est-à-dire une résistance dont la valeur ohmique varie proportionnellement à la température, c'est-à-dire que la logique de commande LOGCOM reçoit un signal SiTEMP, image de la température extérieure TEMP au véhicule.

La logique de commande LOGCOM est apte d'une part de mettre à disposition d'un calculateur du contrôle moteur COMOT destiné à la régulation du régime moteur un signal SiMOT, d'autre part de mettre à la disposition de moyens de commande de l'essuyage ESS un signal SiESS pour des raisons et dans des conditions qui seront explicitées plus avant.

Enfin la logique de commande LOGCOM émet un signal SiReg2 vers le régulateur REG2 du second alternateur ALT2.

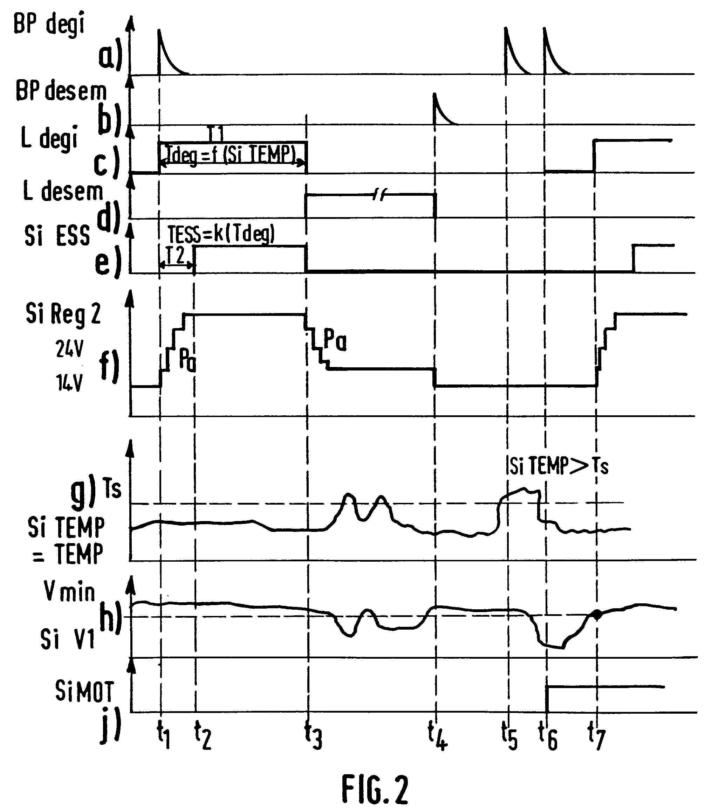

Sur le diagramme temporel de la figure 2, on a représenté
- en a) l'état du signal émis par le bouton de dégivrage BPdegi
- en b) l'état du signal émis par le bouton de désembuage BPdesem
- en c) et d) l'état des signaux émis par la logique de commande LOGCOM vers les lampes de dégivrage Ldegi et de désembuage Ldesem
- en e) le signal SiESS émis par la logique de commande LOGCOM vers le système de commande d'essuyage ESS
- en f) le signal SiReg2 émis par la logique de commande LOGCOM vers le régulateur REG2 du second alternateur ALT2
- en g) le signal SiTEMP émis par la résistance R représentatif de la température extérieure du véhicule. La valeur Ts correspond à une valeur de seuil de la température extérieure au-dessus de laquelle un dégivrage ne doit pas être déclenché
- en h) le signal SiV1 représentatif de la vitesse du premier alternateur ALT1, Vmin étant une valeur de vitesse minimum au-dessous de laquelle l'alternateur ALT2 ne peut fournir la puissance nécessaire au circuit auxiliaire sans risque de calage du moteur thermique du véhicule
- en j) le signal SiMOT émis par la logique de commande LOGCOM vers le calculateur contrôle moteur COMOT.

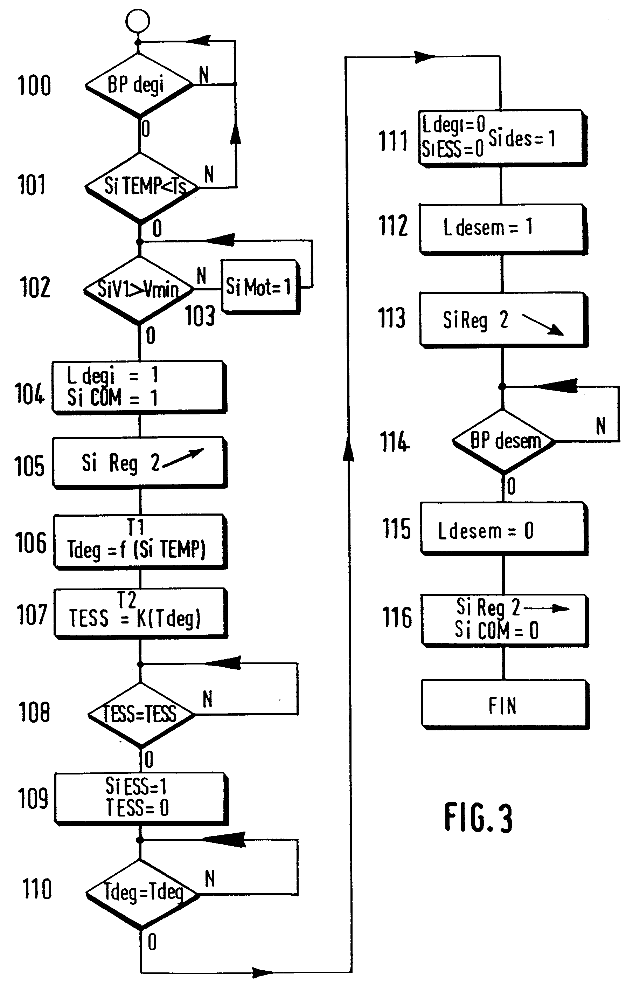

Le dispositif de la figure 1 peut fonctionner selon un cycle opératoire représenté par l'organigramme de la figure 3.

A l'instant t1 du diagramme temporel de la figure 2, le conducteur déclenche une opération de dégivrage par action sur le bouton de dégivrage BPdegi, comme indiqué en 100 sur la figure 3, et qui se traduit par l'envoi d'une impulsion positive à la logique de commande LOGCOM.

Comme indiqué en 101 et g), la logique de commande LOGCOM comporte des moyens de comparaison entre la valeur de la température extérieure TEMP : signal SiTEMP et la valeur d'une température de seuil Ts, par exemple +5°C.

Si, comme en t1, SiTEMP est inférieur à Ts, on autorise l'étape suivante indiquée en 102 et h) où la logique de commande LOGCOM comporte des moyens de comparaison entre la vitesse réelle du premier alternateur ALT1 : signal SiV1 et une vitesse minimum Vmin prédéterminée : par exemple 2800tr/mn.

Si, comme en t1, SiV1 est supérieur à Vmin, les conditions initiales sont remplies pour démarrer l'opération de dégivrage.

Autrement dit, la logique de commande LOGCOM est agencée de manière à n'autoriser le début de l'opération de dégivrage qu'aux conditions suivantes :
- température extérieure TEMP supérieure à la température de seuil Ts
- vitesse réelle de l'alternateur ALT1, et donc de l'alternateur ALT2, supérieure à la vitesse minimum Vmin.

Comme figuré en 104 et c), la logique de commande déclenche l'allumage de la lampe de dégivrage Ldegi et par le signal SiCOM (figure 1) commande les moyens de commutation COM de manière à ce que l'alternateur ALT2 puisse alimenter en direct le pare-brise électrique PBE.

Comme figuré en 105 et f), la logique de ommande LOGCOM comprend des moyens de régulation SiReg2 qui agissent sur le régulateur associé REG2 du second alternateur ALT2 de manière à ce que la tension et donc la puissance fournie au pare-brise électrique PBE augmente progressivement.

Par exemple, le second alternateur ALT2, avant l'opération de dégivrage qui fonctionnait sous une tension stabilisée de l'ordre de 14 volts, va délivrer une tension voisine de 55 volts avec une puissance de 1500 W.

De manière préférentielle, l'augmentation en puissance du second alternateur ALT2 s'effectue par paliers Pa successifs, au nombre de quatre dans l'exemple représenté.

Simultanément aux opérations figurées en 104 et 105, la logique de commande LOGCOM va déclencher le départ de deux moyens de temporisation T1 et T2.

Le premier moyen de temporisation T1 définit un intervalle de temps Tdeg = F(SiTEMP) dont la valeur est fonction de la température extérieure TEMP pour déterminer la durée globale de l'opération de dégivrage.

Cet intervalle de temps sera bien entendu d'autant plus grand, que la température extérieure est basse.

Le second moyen de temporisation T2 est adaptée à définir un second intervalle de temps TESS dont la valeur est une fraction du premier intervalle de temps Tdeg.

Comme figuré en 108, la logique de commande LOGCOM vérifie si l'intervalle de temps TESS n'est pas écoulé. Si tel est le cas, comme figuré en 109 et e), la logique de commande LOGCOM émet un signal SiESS destiné à mettre en oeuvre les moyens de commande d'essuyage ESS sans que le conducteur du véhicule n'ait à intervenir et remet à zéro la temporisation TESS, ce qui correspond au temps t2 du diagramme temporel de la figure 2.

Bien entendu, pendant toute la durée du second intervalle de temps TESS, la mise en oeuvre des moyens de commande d'essuyage est inhibée, c'est-à-dire que le conducteur du véhicule ne peut les mettre en route par les moyens habituels mis à sa disposition.

Autrement dit, le second moyen de temporisation T2 est adapté à provoquer l'inhibition des moyens de commande de l'essuyage ESS.

Comme figuré en 110, la logique de commande LOGCOM vérifie si l'intervalle de temps Tdeg n'est pas écoulé. Si tel est le cas, le temps t3 du diagramme temporel de la figure 2 est atteint et comme figuré en 111,112 et 113, la logique de commande par un signal retardé SiDes commande les opérations suivantes :
- extinction en c) de la lampe de dégivrage Ldegi
- remise à zéro en e) du signal SiESS c'est-à-dire que l'on permet au conducteur de commander manuellement les moyens d'essuyage ESS
- allumage en d) de la lampe de désembuage Ldesem
- remise à zéro de la temporisation Tdeg
- envoi au régulateur REG2 d'un signal SiREG2 tel qu'il va faire décroître la tension, et donc la puissance, fournie par le second alternateur ALT2. Ainsi, la tension de l'alternateur ALT2 va décroître d'une valeur de 55 volts pour l'opération de dégivrage vers une valeur voisine de 24 volts pour une puissance de 400 watts.

De préférence, comme indiqué en f) sur le diagramme temporel, cette décroissance s'effectuera par paliers successifs Pa, trois dans l'exemple représenté.

Autrement dit, la logique de commande LOGCOM est agencée de manière à ce que la seconde temporisation T2 soit apte à émettre un premier signal retardé SiESS destiné au déclenchement automatique des moyens de commande de l'essuyage ESS et à ce que la première temporisation T1 soit apte à émettre un second signal retardé SiDES, destiné d'une part à l'arrêt automatique desdits moyens de commande d'essuyage et d'autre part au déclenchement de l'opération de désembuage.

L'opération de désembuage est maintenue tant que le conducteur n'actionne pas le bouton de désembuage BPdesem comme figuré en 114 ce qui correspond au temps t4 du diagramme de la figure 2.

A cet instant, et comme figuré en 115 et 116, la logique de commande LOGCOM éteint la lampe de désembuage Ldesem et envoie un signal SiCOM qui remet dans les conditions initiales les moyens de commutation COM, c'est-à-dire que le second alternateur ALT2 ne débite plus vers le pare-brise électrique PBE.

Les moyens de régulation émettent un signal SiReg2 approprié ramenant la tension fournie par le second alternateur ALT2 à une valeur voisine de 14 volts.

On se reporte maintenant au temps t5 du diagramme temporel où a été représenté une première condition particulière du fonctionnement de l'ensemble du dispositif.

En effet, au temps t5 on voit en g) que la valeur de la température extérieure TEMP = SiTEMP est supérieure à la valeur de la température de seuil Ts. Toute action sur le bouton de dégivrage BPdegi est inhibé par les moyens de comparaison figurés en 101 de la logique de commande LOGCOM : l'opération de dégivrage ne peut être déclenchée.

Autrement dit, les moyens de comparaison 101 sont aptes à interdire l'opération de dégivrage si la température extérieure TEMP est supérieure à la température de seuil Ts.

Par contre, dans ces conditions, le conducteur pourra déclencher manuellement une opération de désembuage par action sur le bouton BPdesem.

On se reporte maintenant au temps t6 du diagramme temporel où a été représenté une deuxième condition particulière du fonctionnement de l'ensemble du dispositif.

En effet, au temps t6 on voit en h) que la vitesse réelle SiV1 du premier alternateur ALT1 est inférieur à la valeur de la vitesse minimum Vmin prédéterminée.

Dans ces conditions, si l'on déclenche une opération de dégivrage, le second alternateur ALT2 doit fournir rapidement une puissance importante, il en résulte un brusque accroissement du couple résistant sur le moteur thermique du véhicule automobile, accroissement de couple qui peut entraîner jsqu'à un calage dudit moteur thermique.

Le dispositif est agencé de telle sorte qu'il remédie à cet inconvénient.

Comme figuré en 102,103 et j), la logique de commande LOGCOM comporte des moyens de comparaison 102 entre la vitesse réelle SiV1 de l'alternateur ALT1 et donc de l'alternateur ALT2 aptes à interdire l'opération de dégivrage si la vitesse réelle SiV1 est inférieure à la vitesse minimum Vmin.

Dans ces conditions la logique de commande LOGCOM est agencée de manière à émettre vers le calculateur du contrôle moteur COMOT un signal SiMOT pour provoquer une augmentation de la vitesse réelle SiV1 de l'alternateur et n'autoriser le déclenchement de l'opération de dégivrage que si ladite vitesse réelle SiV1 est égale ou supérieure à ladite vitesse minimum (Vmin).

Lorsque la vitesse Vmin est atteinte, comme représenté au temps t7 du diagramme temporel, l'opération de dégivrage peut commencer et se dérouler comme précédemment décrit.

En variante, le dispositif peut être agencé de manière à ce que le signal SiMOT soit émis dès qu'une opération de dégivrage est demandée ce qui permet, pendant toute la durée de celle-ci de maintenir une vitesse de rotation de l'alternateur au moins égale à la valeur minimum Vmin.

Bien entendu la présente invention ne se limite pas aux formes de réalisation décrites ou représentées mais englobe toute variante que l'homme de l'art pourrait y apporter.

En particulier, la logique de commande LOGCOM peut être réalsée à l'aide soit de semi-conducteurs, soit d'un microprocesseur sans pour cela sortir du cadre de l'invention.

## Revendications

**1-** Dispositif pour le dégivrage et/ou le désembuage notamment d'un pare-brise électrique (PBE) de véhicule automobile comprenant une batterie (BAT) reliée à un premier alternateur (ALT1), des moyens d'alimentation (ALT2,REG2,COM) du pare-brise électrique (PBE), une logique de commande (LOGCOM) recevant un signal (SiTEMP) image de la température extérieure (TEMP) du véhicule et déclenchant au début d'une opération de dégivrage un premier moyen de temporisation (T1) définissant un premier intervalle de temps (Tdeg), dont la valeur est fonction du signal (SiTEMP) pour déterminer la durée globale de l'opération de dégivrage, des moyens de commande de l'essuyage (ESS), caractérisé en ce qu'un second moyen de temporisation (T2) est adapté à définir un second intervalle de temps (Tess), dont la valeur est une fraction du premier intervalle de temps (Tdeg) pendant lequel les moyens de commande de l'essuyage (ESS) sont inhibés, et en ce que ledit second moyen de temporisation (T2) est adapté à provoquer l'inhibition des moyens de commande de l'essuyage (ESS).

**2-** Dispositif selon la revendication 1, caractérisé en ce que la logique de commande (LOGCOM) est agencée de manière à ce que le second moyen de temporisation (T2) soit apte à émettre un premier signal retardé (SiESS) destiné au déclenchement automatique des moyens de commande de l'essuyage (ESS) et à ce que le premier moyen de temporisation (T1) soit apte à émettre un second signal retardé (SiDes) destiné d'une part à l'arrêt automatique desdits moyens de commande de l'essuyage et d'autre part au déclenchement de l'opération de désembuage.

**3-** Dispositif selon la revendication 1, caractérisé en ce que la logique de commande (LOGCOM) comporte des moyens de comparaison (101), entre la température extérieure (TEMP) et une température de seuil prédéterminée (Ts), aptes à interdire l'opération de dégivrage si la température extérieure (TEMP) est supérieure à la température de seuil (Ts).

**4-** Dispositif selon la revendication 1, caractérisé en ce que les moyens d'alimentation du pare-brise électrique comporte un second alternateur (ALT2) associé à un régulateur (REG2) et des moyens de commutation (COM) adaptés à mettre en liaison directe le second alternateur (ALT2) avec le pare-brise électrique (PBE) lors d'une opération de dégivrage et/ou de désembuage.

**5-** Dispositif selon la revendication 4, caractérisé en ce que la logique de commande (LOGCOM) comporte des moyens de comparaison (102), entre la vitesse réelle (SiV1) du premier alternateur (ALT1) et une vitesse minimum prédéterminée (Vmin), aptes à interdire l'opération de dégivrage si la vitesse réelle (SiV1) est inférieure à la vitesse minimum (Vmin).

**6-** Dispositif selon la revendication 5, dont le véhicule comporte un calculateur du contrôle moteur (COMOT) destiné à la régulation du régime moteur, caractérisé en ce que la logique de commande (LOGCOM) est agencée de manière à émettre vers ledit calculateur (COMOT) un signal (SiMOT) lorsque la vitesse réelle (SiV1) est inférieure à la vitesse minimum (Vmin), ledit signal (SiMOT) provoquant une augmentation de la vitesse réelle des premier et second alternateurs (ALT1,ALT2), de manière à n'autoriser le déclenchement de l'opération de dégivrage que si ladite vitesse réelle (SiV1) est égale ou supérieure à ladite vitesse minimum (Vmin).

**7-** Dispositif selon l'une des revendications précédentes, caractérisé en ce que la logique de commande (LOGCOM) comprend des moyens de régulation (SiREG2) aptes, lors d'une opération de dégivrage, à provoquer une augmentation de puissance du second alternateur (ALT2), ladite augmentation comportant des paliers successifs (Pa).
